Europäisches Patentamt

European Patent Office

Office européen des brevets

(11) Veröffentlichungsnummer: **0 172 309**

**A1**

(12) # EUROPÄISCHE PATENTANMELDUNG

(21) Anmeldenummer: 85104225.9

(22) Anmeldetag: 06.04.85

(51) Int. Cl.⁴: **B 23 K 9/04**
B 23 K 31/02

(30) Priorität 19.06.84 DE 3422636

(43) Veröffentlichungstag der Anmeldung:
26.02.86 Patentblatt 86/9

(84) Benannte Vertragsstaaten:
AT CH FR GB IT LI SE

(71) Anmelder: M.A.N. MASCHINENFABRIK
AUGSBURG-NÜRNBERG Aktiengesellschaft
Bahnhofstrasse 66
D-4200 Oberhausen(DE)

(72) Erfinder: Million, Karl, Dr.-Ing.
Am Grafenbusch 46
D-4200 Oberhausen 1(DE)

(72) Erfinder: Datta, Ratan, Dipl.-Ing.
Elstnerstrasse 26
D-4200 Oberhausen 11(DE)

(72) Erfinder: Zimmermann, Horst
Genterstrasse 111
D-4200 Oberhausen 14(DE)

(54) **Verfahren zur Herstellung eines Konstruktionsteils durch formgebende Auftragsschweissung sowie nach dem Verfahren hergestelltes Konstruktionsteil.**

(57) Verfahren zur Herstellung eines Konstruktionsteils aus Schweißbut durch formgebende Viellage-Auftragsschweißung, wobei das Schweißgut mit einzelnen Schweißraupen aufgetragen wird, die an unterschiedlichen Stellen des Konstruktionsteils liegen und situationsbedingt unterschiedlichen Warmeabfuhrbedingungen ausgesetzt sind, wobei die Energiezufuhr und damit das Schmelzbad volumen für die einzelnen Schweißraupen nach Maßgabe der Wärmeabfuhrbedingungen unterschiedlich derart eingestellt wird, daß sich annähernd deckungsgleiche Abkühlkurven im Schweißgut aller Einzelraupen einstellen und diese somit konstante Festigkeits- und Zähigkeitseigenschaften aufweisen.

Fig.2

Croydon Printing Company Ltd.

0172309

Verfahren zur Herstellung eines Konstruktionsteils durch formgebende Auftragsschweißung sowie nach dem Verfahren hergestelltes Konstruktionsteil

Die Erfindung betrifft ein Verfahren zur Herstellung eines Konstruktionsteils aus Schweißgut durch formgebende Viellagen-Auftragsschweißung, wobei das Schweißgut in Schweißraupenlagen aufgetragen wird und im Gefüge einzelner Schweißraupenlagen, die an unterschiedlichen Stellen des Konstruktionsteils gelegen sind, bei situationsbedingt unterschiedlichen Wärmeabfuhrbedingungen und infolgedessen unterschiedlichen Erstarrungs- und Erkaltungsgeschwindigkeiten sich unterschiedliche Kristallisations- und Umwandlungsstrukturen ausbilden. Weiter betrifft die Erfindung ein nach dem Verfahren hergestelltes Konstruktionsteil.

Beim Form-Schweißen handelt es sich um ein bekanntes Verfahren zur Herstellung von Konstruktionsteilen vollständig aus Schweißgut. Beispielsweise können Erzeugnisse aus niedrig- und hochlegierten Stählen, wie z. B. Schüsse, Böden, Stutzen und Rohrkrümmer für den nuklearen und chemischen Apparatebau durch das Fertigungsverfahren des Form-Schweißens schnell und wirtschaftlich hergestellt werden, wobei höchsten Werkstoffanforderungen genügende Materialqualitäten im Konstruktionsteil erreicht werden. Das Form-Schweißen eignet sich demnach als Herstellungsverfahren für hochbeanspruchte Konstruktionsteile, wobei kurze Herstellungszeiten und flexible Formgebungsmöglichkeiten weitere Vorteile sind. Dabei werden hochproduktive, mechanisierte Schweißverfahren angewendet, wie z. B. das im Apparatebau vielseitig bewährte Unterpulverschweißverfahren (UP). Wesentliche Vorteile bei der Herstellung von Konstruktionsteilen durch Form-Schweißen sind relativ kurze Herstellungszeiten, relativ geringer Fertigungsaufwand und die Möglichkeit der einteiligen Formgebung ohne Schweißnähte. Schließlich sind für das so hergestellte Teil außer Spannungsarmglühung keine weiteren Wärmebehandlung, z. B. durch Vergüten, erforderlich. Bearbeitungszugaben, wie sie bei Schmiedeteilen oder Gußteilen vielfach erforderlich sind, können beim Form-Schweißen auf ein Minimum reduziert und damit Herstellungskosten gespart werden.

Beim lagenweisen Auftragen von Schweißraupen nach üblichen Verfahren der Auftragsschweißung im UP-Verfahren mittels Einzelelektrode oder im Tandemverfahren mit zwei hintereinander geführten Elektroden wird im Gefüge einzelner Schweißraupenlagen, die an unterschiedlich exponierten Stellen des Konstruktionsteils angebracht sind, eine situationsbedingt unterschiedlich schnelle Abkühlung des mit der Schweißraupe aufgetragenen Schmelzbades eine zwangsläufige Folge sein. Bei derartig situationsbedingt unterschiedlichen Wärmeabfuhrbedingungen, wie sie an verschiedenen Stellen des Konstruktionsteiles unvermeidlich sind, ergeben sich daher unterschiedliche Erstarrungs- und/oder Erkaltungsgeschwindigkeiten, die zu unterschiedlichen Kristallisations- und Umwandlungsstrukturen im Querschnittsbild einzelner Schweißraupen führen.

Der Erfindung liegt die Aufgabe zugrunde, bei einem Verfahren zur Herstellung eines Konstruktionsteils aus Schweißgut durch formgebende Viellagenauftragsschweißung der eingangs genannten Art eine Verbesserung dahingehend zu erzielen, daß sich ein konstanter Wärmeabfluß und somit eine konstante Abkühlgeschwindigkeit im Schweißgut einstellt, unter Überwindung der situationsbedingt unterschiedlichen Wärmeabfuhrbedingungen. Damit soll erreicht werden, daß ein Schweißgut hergestellt wird, das im Bereich seiner gesamten Masse eine homogene Kristallisations- und Umwandlungsstruktur und damit Materialgefüge mit weitgehend gleichen Festigkeits- und Zähigkeitseigenschaften aufweist, sei es im mittleren Bereich oder im Randbereich beispielsweise einer senkrecht formgebend geschweißten dicken Wandung.

Die Lösung der gestellten Aufgabe gelingt bei einem Verfahren zur Herstellung eines Konstruktionsteils aus Schweißgut durch formgebende Auftragsschweißung der eingangs genannten Art mit der Erfindung dadurch, daß die Energiezufuhr und damit das Schmelzbadvolumen für die einzelnen Schweißraupenlagen nach Maßgabe der Wärmeabfuhrbedingungen unterschiedlich derart eingestellt wird, daß sich ein konstanter Wärmeabfluß und somit eine deckungsgleiche Abkühlkurve im Schweißgut einstellt.

Mit großem Vorteil wird durch das Verfahren nach der Erfindung erreicht, daß die Abkühlungskurven jeder einzelnen Schweißraupe, von der hohen Temperatur des Schmelzbades bis zur niedrigeren Temperatur des Werkstücks, annähernd deckungsgleich gehalten werden, indem mittels Anpassung der Energiezufuhr durch Änderung der beim Schweißen eingestellten Bedingungen die lokale Wärmeeinbringung in den einzelnen Schweißraupen nach Maßgabe ihrer geometrischen Lage im Bauteil so gesteuert wird, daß die Wärmeabfuhr in den umgebenden Werkstoff annähernd gleichbleibende Verhältnisse erreicht. Damit wird der nachteilige Einfluß unterschiedlicher Wärmeabfuhrbedingungen überwunden und es bilden sich infolgedessen ausgeglichen gleichmäßiger Erstarrungs- und/oder Erkaltungsgeschwindigkeiten in den einzelnen Schweißraupenlagen annähernd gleiche Kristallisations- und Umwandlungsstrukturen aus.

Eine Ausgestaltung sieht vor, daß an Stellen intensiverer Wärmeabfuhr die Energiezufuhr erhöht wird. Eine die Ausführung vorteilhaft erleichternde Ausgestaltung sieht dabei vor, daß die Abkühlkurven der zur Werkstoffmasse unterschiedlich situierten Schweißraupen ermittelt und die Energiezufuhr nach Maßgabe der günstigsten Abkühlkurve eingestellt wird. Derartige Ermittlungen lassen sich sehr leicht im standardisierten Modellversuch ausführen und die gefundenen Werte auf die praxisnahe Gestaltung eines Konstruktionsteils mühelos übertragen.

Ein sehr einfaches Verfahrensschema ergibt sich beispielsweise dadurch, daß einige geometrische Schweißraupen im Bauteil nach den räumlichen Wärmeabfuhrverhältnissen unterschieden werden, beispielsweise Engspaltraupen, Eckraupen, Oberflächenraupen und Kantenraupen. Bei diesen nimmt in der genannten Reihenfolge das von der umgebenden Werkstoffmasse abhängige Wärmeabfuhrvermögen des Werkstücks in vier annähernd gleichmäßigen Stufen ab, und zwar bei eienr Definition der Wärmeabfuhr für eine Engspaltraupe mit 100 % etwa in den Stufe 75 % für Eckraupen, 50 % für Oberflächenraupen und 25 % für Kantenraupen.

Entsprechend dieser stufenweisen Zuordnung einer Abkühlkurve nach Maßgabe der geometrischen Lage im Bauteil ist mit der Erfindung vorgeshen, daß Kantenraupen mit geringerer Energiezufuhr ausgeführt werden als Oberflächenraupen, und diese mit geringerer Energiezufuhr als Eckraupen, und diese wiederum mit geringerer Energiezufuhr als Engspaltraupen.

Auf diese Weise kann ebenfalls in sehr vorteilhafter Art mit einer Programmsteuerung die Energiezufuhr und damit das Badvolumen einer Schweißraupe entsprechend ihrer geometrischen Lage im Bauteil vorprogrammiert eingestellt werden.

Ein Konstruktionsteil, welches aus Schweißgut durch formgebende Viellagenschweißung nach einem Verfahren entsprechend der Erfindung hergestellt ist, unterscheidet sich dadurch von ähnlichen, nach dem Stand der Technik hergestellten Teilen, daß es gleichmäßige Festigkeits- und Zähigkeitseigenschaften in den zum Aufbau desselben in allen Teilen der Materialmasse aufgetragenen Schweißraupen aufweist. Das Konstruktionsteil ist vorzugsweise aus einem Schweißgut hergestellt, welches in seiner Materialqualität der Qualität 10 MnMoNi 55 entspricht.

Rein äußerlich ist dem Konstruktionsteil nach dem erfindungsgemäßen Verfahren dessen Herstellungsart bereits dadurch anzusehen, daß bei diesem die Breite der Schweißraupen vom Materialkern her zur Außenseite hin abnimmt.

Die Erfindung wird in Zeichnungen in einer rein schematisch dargestellten Ausführungsform gezeigt, wobei aus den Zeichnungen weitere vorteilhafte Einzelheiten der Erfindung entnehmbar sind.

Es zeigen:

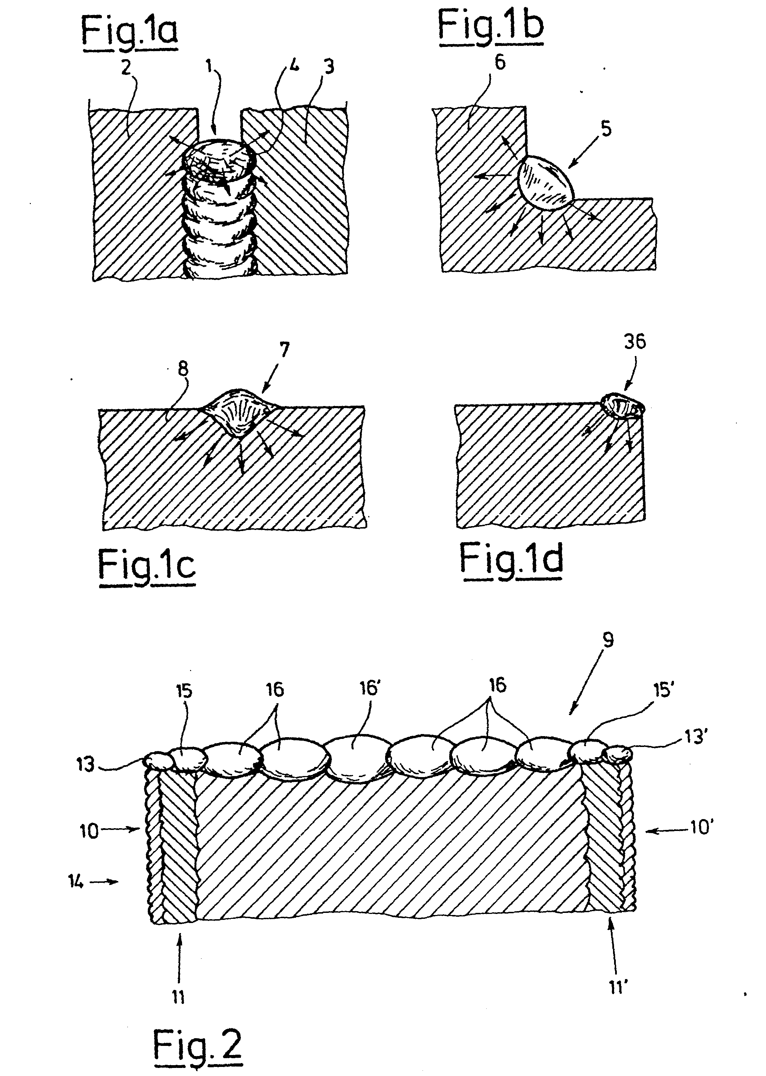

Figur 1 a die Wärmeabfuhrmöglichkeiten einer Engspaltraupe, im Quershcnitt;

Figur 1 b die Wärmeabfuhrmöglichkeiten einer Eckraupe,
ebenfalls im Querschnitt;

Figur 1 c die Wärmeabfuhrmöglichkeiten einer Oberflächenraupe, ebenfalls im Querschnitt;

Figur 1 d die Wärmeabfuhrmöglichkeiten einer Kantenraupe, ebenfalls im Querschnitt;

Figur 2 ein nach dem erfindungsgemäßen Formschweißverfahren direkt auf Fertigmaß hergestellter
Wanddickenbereich, ebenfalls im Schnitt.

Die in einem Engspalt 1 zwischen zwei miteinander zu
verbindenden Konstruktionselementen 2 und 3 aufgetragene Engspaltraupe 4 steht mit annähernd 100 % ihres
Umfanges im unmittelbaren Kontakt mit der umgebenden
Materialmasse. Entsprechend den mit dünnen Pfeilen
angedeuteten Richtungen fließen räumlich verteilte
Wärmeströme aus dem im Auftragszustand schmelzflüssigen
Schweißbad radial in die umgebenden Materialbereiche.
Um zu einer stufenweisen Beurteilung der Wärmeabfluß-
und damit der Abkühlungs-Verhältnisse von Schweißraupen
nach Maßgabe ihrer unterschiedlichen geometrischen
Situation im umgebenden Material zu gelangen, wird die
sich hierbei ergebende Wärmeabfuhr mit annähernd 100 %
definiert.

Die Eckraupe gemäß vereinfachter Darstellung in Figur
1 b hat mit etwa 75 % ihres Umfanges direkten Kontakt

- 7 -

0172309

mit dem umgebenden Konstruktionselement 6. Die Wärmeabfuhrbedingungen sind entsprechend geringer als bei der Engspaltraupe 4, sie werden vereinfacht mit ca. 75 % angenommen.

Bei der Oberflächenraupe 7 entsprechend Figur 1 c findetein noch geringerer Wärmefluß in das umgebende Element 8 statt; ihr Wärmeabfuhrkoeffizient wird mit vereinfacht ca. 50 % angesetzt.

Eine noch geringere Wärmeabfuhr erfährt die Kantenraupe 36 gemäß Figur 1 d; ihr Wärmeabflußkoeffizient wird mit ca. 25 % angesetzt.

Figur 2 zeigt ein nach dem erfindungsgemäßen Verfahren hergestelltes Wandelement 9 eines durch Form-Schweißen hergestellten Konstruktionsteils. Bei diesem können beispielsweise drei Bereiche unterschieden werden, nämlich der äußere, eng schraffiert dargestellte Oberflächenbereich 10, 10', weiter innen ein Übergangsbe-reich 11, 11' und dazwischen ein Bereich von Füllvolumen 12. Entsprechend der Lehre der Erfindung sind Eckraupen 13, 13' mit geringerer Enrgiezufuhr und demzufolge geringerem Schmelzbadvolumen und geringerer Breite ausgeführt. Sie ergeben dadurch auch eine günstigere Oberflächenstruktur 14 im Oberflächenbereich 10 mit kleinerer Welligkeit als Raupen mit größerem Schmelzbadvolumen. Im Übergangsbereich 11 werden mittelgroße Schweißraupen 15, 15' gelegt, die mit höherer Energie und entsprechend größerem Badvolumen ausgeführt sind als die Eckraupen 13, 13'.

Im mittigen Bereich 12 der Wanddicke nehmen die Schweißbadvolumen 16 und 16' zu, indem sie mit weiter gesteigerter Energiezufuhr und entsprechend größerem Schmelzbadvolumen ausgeführt sind.

Ein nach dem Verfahren der Erfindung hergestelltes Bauteil kann daher bei einem Anschliff unschwer durch Begutachtung der Schweißraupenkonfiguration und/oder der Schweißbereiche zweifelsfrei erkannt werden. Hinzu kommt, daß infolge Anwendung des erfindungsgemäßen Verfahrens eine gleichmäßige Kristallisations- und Umwandlungsstruktur im gesamten Gefügequerschnitt des Elementes 9 vorliegt, entsprechend auch annähernd gleichmäßige Festigkeits- und Zähigkeitswerte der Schweißraupenlagen sowie ein in sich annähernd homogenes Gefüge.

**Patentansprüche :**

1. Verfahren zur Herstellung eines Konstruktionsteils aus Schweißgut durch formgebende Viellage-Auftragsschweißung, wobei das Schweißgut mit einzelnen Schweißraupen aufgetragen wird, die an unterschiedlichen Stellen des Konstruktionsteils liegen und situationsbedingt unterschiedlichen Wärmeabfuhrbedingungen ausgesetzt sind, dadurch gekennzeichnet, daß die Energiezufuhr und damit das Schmelzbadvolumen für die einzelnen Schweißraupen nach Maßgabe der Wärmeabfuhrbedingungen unterschiedlich derart eingestellt wird, daß sich annähernd deckungsgleiche Abkühlkurven im Schweißgut aller Einzelraupen einstellen und diese somit konstante Festigkeits- und Zähigkeitseigenschaften aufweisen.

2. Verfahren nach Anspruch 1, dadurch gekennzeichnet, daß an Stellen intensiver Wärmeabfuhr die Energiezufuhr erhöht wird.

3. Verfahren nach Anspruch 1 und 2, dadurch gekennzeichnet, daß die lokalen Wärmeabfuhrbedingungen in Abhängigkeit von der umgebenden Werkstoffmasse ermittelt und die Energiezufuhr nach Maßgabe der Wärmeabfuhrkennzahl eingestellt wird.

4. Verfahren nach einem der Ansprüche 1 bis 3, dadurch gekennzeichnet, daß die günstigsten Abkühlbedingungen für die Schweißraupen ermittelt werden und als Bemessungsgrößen für die Einstellung der lokalen Energiezufuhr verwendet werden.

0172309

5. Verfahren nach einem der Ansprüche 1 bis 4, dadurch gekennzeichnet, daß beim Konstruktionsteil im Bereich geringerer Materialmasse gelegene Schweißraupen, z. B. im Bereich einer Außenkante, mit geringerer Energiezufuhr und geringerem Schweißbadvolumen aufgetragen werden als im Bereich größerer Materialmasse, z. B. im Mittelbereich gelegene Schweißraupen.

6. Verfahren nach Anspruch 5, dadurch gekennzeichnet, daß Kantenraupen mit geringerer Energiezufuhr ausgeführt werden als Oberflächenraupen, und diese mit geringerer Energiezufuhr als Eckraupen und diese wiederum mit geringerer Energiezufuhr als Engspaltraupen.

7. Konstruktionsteil, welches aus Schweißgut durch formgebende Viellagenschweißung hergestellt ist, wobei das Schweißgut in aufeinanderfolgenden Schweißraupenlagen hergestellt ist, dadurch gekennzeichnet, daß es nach einem den vorhergehenden Ansprüchen 1 bis 6 entsprechenden Verfahren hergestellt ist und ein gleichmäßiges Kristallisations- und Umwandlungs-Gefüge in den zum Aufbau desselben in allen Teilen der Materialmasse aufgetragenen Schweißraupenlagen aufweist.

8. Konstruktionsteil nach Anspruch 7, dadurch gekennzeichnet, daß es vorzugsweise aus einem Schweißgut hergestellt ist, das in seiner Materialqualität der Qualität 10 MnMoNi 55 entspricht.

9. Konstruktionsteil nach Anspruch 7 oder 8, dadurch gekennzeichnet, daß bei diesem das Volumen der Schweißraupen vom Materialkern her zur Außenseite hin abnimmt.

-1/1-

0172309

Fig.1a

Fig.1b

Fig.1c

Fig.1d

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-B-2 320 186 (AUGUST THYSSEN-HÜTTE AG) <br> * Anspruch 5, Spalte 6, Zeilen 30, 31 * | 1,2,4 | B 23 K 9/04 <br> B 23 K 31/02 |
| A | | 7 | |
| | --- | | |
| Y | DE-B-2 346 872 (MESSER GRIESHEIM GMBH) <br> * Anspruch 4, Spalte 3, Zeilen 2-46 * | 1,2,4 | |
| A | | 3,5,6 | |
| | ----- | | |

RECHERCHIERTE SACHGEBIETE (Int Cl 4)

B 23 K 9/00
B 23 K 31/00

Der vorliegende Recherchenbericht wurde für alle Patentansprüche erstellt.

| Recherchenort <br> BERLIN | Abschlußdatum der Recherche <br> 13-09-1985 | Prüfer <br> WUNDERLICH J E |
|---|---|---|